Europäisches Patentamt

European Patent Office

Office européen des brevets

(11) Numéro de publication: **0 134 262**
**A1**

## (12) DEMANDE DE BREVET EUROPEEN

(21) Numéro de dépôt: 83107768.0

(22) Date de dépôt: 06.08.83

(51) Int. Cl.⁴: $A\ 01\ G\ 9/10$

(43) Date de publication de la demande:
20.03.85 Bulletin 85/12

(84) Etats contractants désignés:
AT BE CH DE FR IT LI NL

(71) Demandeur: Erny, Antoine
232 avenue d'Altkirch
F-68200 Mulhouse(FR)

(72) Inventeur: Erny, Antoine
232 avenue d'Altkirch
F-68200 Mulhouse(FR)

(74) Mandataire: Nithardt, Roland
CABINET ROLAND NITHARDT 2, rue du 17 Novembre
F-68100 Mulhouse(FR)

(54) Procédé de culture en récipient imperméable et arrangements floraux obtenus par ce procédé.

(57) La présente invention concerne un procédé de culture en récipient imperméable dans lequel on sème une graine ou on transplante une plante dans ledit récipient contenant au moins un matériau granuleux poreux, ce procédé étant caractérisé en ce que le matériau poreux est obtenu par concassage d'une pierre naturellement poreuse. Ce procédé permet de réaliser des arrangements floraux dans lesquels les espaces entre les parois du récipient et les mottes entourant les racines des plantes sont remplis par un matériau contenant approximativement un tiers de pierre naturellement poreuse concassée.

EP 0 134 262 A1

## PROCEDE DE CULTURE EN RECIPIENT IMPERMEABLE ET ARRANGEMENTS FLORAUX OBTENUS PAR CE PROCEDE

La présente invention concerne un procédé de culture en récipient imperméable dans lequel on sème une graine ou on transplante une plante dans ledit récipient contenant au moins un matériau granuleux poreux.

Elle concerne également un arrangement de plantes d'intérieur plantées dans un récipient imperméable réalisé à l'aide du procédé de culture selon l'invention.

Elle concerne enfin une matière granuleuse pour la mise en oeuvre de ce procédé.

On connaît déjà des procédés de culture en récipient imperméable dans lesquels on utilise une matière granuleuse neutre telle que par exemple du sable, comme support des racines des plantes, une réserve d'eau et de matières nutritives disposée à la base du récipient et une ou plusieurs mèches destinées à amener la solution nutritive de la réserve vers les racines des plantes. Bien que ces procédés donnent d'excellents résultats pratiques, ils nécessitent une mise en oeuvre relativement complexe que certains fleuristes ou horticulteurs ne sont pas disposés à assumer.

On a développé également un autre procédé dans lequel la matière neutre qui sert de support aux plantes est elle-même poreuse et assure le transport de la matière nutritive par capillarité. La matière utilisée et couramment commercialisée sous la dénomination GROLIT 2000®, est un produit fabriqué à partir d'argile expansée qui est soumise à une série de traitements de séchage, de cuisson, d'expansion par aspersion d'eau froide, à nouveau de séchage et de cuisson et finalement de concassage qui rendent le produit extrêmement coûteux. Cette fabrication nécessite des installations de stockage et de traitement extrêmement importante et l'ensemble des opérations auxquelles est soumise la matière première avant d'aboutir au produit fini s'étale sur plusieurs mois. Ces raisons font que le produit trop coûteux à l'utilisation ne connait qu'une diffusion limitée.

La présente invention se propose de pallier les inconvénients susmentionnés en développant un procédé dans lequel on utilise une matière poreuse

particulièrement économique.                    **0134262**

Dans ce but, le procédé selon l'invention est caractérisé en ce que la matière poreuse est obtenue par concassage d'une pierre naturellement poreuse.

Selon un mode d'utilisation préféré, le récipient contient également un mélange neutre composé de tourbe et de sable, ce mélange neutre représente de préférence approximativement les 2/3 de la matière contenue dans le récipient et le matériau poreux représente avantageusement le 1/3 complémentaire.

Dans le cas d'une transplantation de plante on entoure la motte formée autour des racines de cette plante de pierre naturellement poreuse concassée ou d'un mélange de sable, de tourbe et de pierre naturellement poreuse concassée, ce mélange étant préparé dans les proportions susmentionnées.

Les arrangements de plantes d'intérieur plantées dans un récipient imperméable selon l'invention, sont caractérisés en ce que la matière qui remplit les espaces entre les parois du récipient et les mottes entourant les racines des plantes contiennent au moins une matière poreuse obtenue par concassage d'une pierre naturellement poreuse.

Grâce à l'utilisation de la pierre poreuse concassée comme matériau de remplissage lors de la transplantation de plantes, on résoud aisément le problème de l'amenée de solution nutritive à proximité des racines et on supprime les inconvénients des procédés antérieurs selon lesquels on amenait la solution nutritive au voisinage des racines par capillarité au moyen de mèches appropriées. La mise en oeuvre du procédé décrit ne nécessite aucune connaissance spéciale et n'entraîne aucune intervention complémentaire de la part de l'horticulteur amateur ou professionnel.

Pour les grandes cultures, il est possible de mélanger du sable ou du sable et de la tourbe à la pierre naturellement poreuse concassée de façon à réduire le coût des cultures. Cette façon de procéder simplifie considérablement certaines cultures puisqu'elle permet de transplanter les plantes à l'état jeune directement dans le pot final sans passer par les

0134262

différents stades de transplantation. Par conséquent, ce procédé permet d'éviter un certain nombre d'interventions plus ou moins coûteuses. En outre, l'utilisation de ce procédé supprime les problèmes inhérents à la qualité de la terre qui peut varier d'un point à un autre et se dégrader au cours du temps. Un autre avantage du procédé de culture décrit résulte du fait qu'il supprime la réserve d'eau et par là la contrainte du contrôle de cette réserve. En outre, pour soigner les arrangements floraux préparés selon le procédé de l'invention, il suffit d'arroser les plantes par le haut en prenant les mêmes précautions que celles que l'on prend pour des arrangements floraux traditionnels plantés dans de la terre.

Différentes roches naturellement poreuses peuvent être utilisées notamment l'une des plus connues la pierre ponce ou tout autre roche ayant des caractéristiques équivalentes.

La présente invention a été décrite en référence à la description d'exemples de réalisation préférée . Elle peut subir différentes variantes évidentes pour l'homme de l'art sans quitter le cadre de l'invention prise dans ses aspects les plus larges.

0134262

REVENDICATIONS

1. Procédé de culture en récipient imperméable dans lequel on sème une graine ou on transplante une plante dans ledit récipient contenant au moins un matériau granuleux poreux, caractérisé en ce que ce matériau poreux est obtenu par concassage d'une pierre naturellement poreuse.

2. Procédé selon la revendication 1, caractérisé en ce que le récipient contient également un mélange neutre composé de tourbe et de sable.

3. Procédé selon la revendication 2, caractérisé en ce que le mélange neutre représente au moins approximativement les 2/3 de la matière contenue dans le récipient, la matière poreuse représentant le 1/3 complémentaire.

4. Procédé selon la revendication 1, caractérisé en ce que, dans le cas d'une transplantation de plante, on entoure la motte formée autour des racines de cette plante d'un mélange de matière contenant au moins 1/3 de matériau poreux obtenu par concassage d'une pierre naturellement poreuse.

5. Arrangement de plantes d'intérieur planté dans un récipient imperméable, caractérisé en ce que la matière qui remplit les espaces entre les parois du récipient et les mottes entourant les racines des plantes, contient au moins une matière poreuse obtenue par concassage d'une pierre naturellement poreuse.

6. Matière granuleuse obtenue par concassage d'une pierre naturellement poreuse, pour la mise en oeuvre du procédé de l'une quelconque des revendications 1 à 4, et pour la réalisation d'arrangements de plantes d'intérieur selon la revendication 5.

**Office européen des brevets**

**0134262**

**RAPPORT DE RECHERCHE EUROPEENNE**

Numéro de la demande

EP  83 10 7768

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| X | DE-A-1 542 676  (BAENSCH)<br><br>* Page 2, dernier paragraphe - page 4, paragraphe 3 * | 1,4,5,6 | A 01 G   9/10 |
| X | GB-A-1 115 525  (FISONS FERTILIZERS)<br>* Page 2, lignes 21-110 * | 1,2 | |

---

DOMAINES TECHNIQUES RECHERCHES (Int. Cl. ³)

A 01 G
C 05 F

Le présent rapport de recherche a été établi pour toutes les revendications

| Lieu de la recherche | Date d'achèvement de la recherche | Examinateur |
|---|---|---|
| LA HAYE | 06-04-1984 | HERYGERS J.J. |